(19)

Europäisches
Patentamt
European
Patent Office
Office européen
des brevets

(11) **EP 3 447 837 A1**

(12) **EUROPEAN PATENT APPLICATION**
published in accordance with Art. 153(4) EPC

(43) Date of publication:
 **27.02.2019  Bulletin 2019/09**

(21) Application number: **17785600.2**

(22) Date of filing: **03.02.2017**

(51) Int Cl.:
 $H01M\ 10/0562$ (2010.01)    $C01B\ 25/45$ (2006.01)
 $H01B\ 1/06$ (2006.01)    $H01B\ 1/08$ (2006.01)
 $H01M\ 10/052$ (2010.01)

(86) International application number:
 **PCT/JP2017/004061**

(87) International publication number:
 **WO 2017/183255 (26.10.2017 Gazette 2017/43)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **MA MD**

(30) Priority:  **19.04.2016  JP 2016083862**

(71) Applicant: **Murata Manufacturing Co., Ltd.
 Nagaokakyo-shi, Kyoto 617-8555 (JP)**

(72) Inventors:
 • **YOSHIOKA Makoto
  Nagaokakyo-shi
  Kyoto 617-8555 (JP)**

 • **ITO Akisuke
  Nagaokakyo-shi
  Kyoto 617-8555 (JP)**
 • **TAKANO Ryohei
  Nagaokakyo-shi
  Kyoto 617-8555 (JP)**
 • **ISHIKURA Takeo
  Nagaokakyo-shi
  Kyoto 617-8555 (JP)**

(74) Representative: **Reeve, Nicholas Edward
  Reddie & Grose LLP
  The White Chapel Building
  10 Whitechapel High Street
  London E1 8QS (GB)**

(54) **SOLID ELECTROLYTE AND ALL-SOLID-STATE BATTERY**

(57)   There is provided an improvement in ionic conductivity of a solid-state electrolyte layer and an improvement in the battery characteristics of an all-solid-state battery.

The solid-state electrolyte is a solid-state electrolyte having a NaSICON-type crystal structure. The solid-state electrolyte is represented by a general formula $Li_{1+x}M_y(PO_4)_3$ (in which a part of P may be substituted by at least one selected from the group consisting of Si, B, and V, M includes at least one of the elements which are monovalent to tetravalent cations, x is - 0.200 or more and 0.900 or less, and y is 2.001 or more and 2.200 or less).

FIG. 1

EP 3 447 837 A1

**Description**

TECHNICAL FIELD

The present invention relates to a solid-state electrolyte and an all-solid-state battery.

BACKGROUND ART

Conventionally, all-solid-state batteries have been known as secondary batteries having excellent reliability and safety. For example, Patent Documents 1 and 2 describe an all-solid-state battery having a solid-state electrolyte made of a phosphate compound having a NaSICON structure. In addition, Patent Document 3 describes a solid-state electrolyte material represented by Chemical formula $Li_xM1_yM2_zZr_{2-x}(PO_4)_3$ (in which M1 includes at least one selected from Ti, Ge, and Zr, and M2 includes at least one selected from Mg, Ca, Ba, Al, Cr, In, Sc, Y, and Hf).

PRIOR ART DOCUMENTS

PATENT DOCUMENTS

Patent Document 1: Japanese Patent Application Laid-Open No. 2007-258148
Patent Document 2: Japanese Patent Application Laid-Open No. 2001-143754
Patent Document 3: Japanese Patent Application Laid-Open No. 2015-065021

SUMMARY OF THE INVENTION

Problem to be solved by the invention

There is a demand for an all-solid-state battery to improve the ionic conductivity of the solid-state electrolyte layer and to improve the battery characteristics of the all-solid-state battery.

A main object of the present invention is to improve the ionic conductivity of the solid-state electrolyte layer and to improve the battery characteristics of the all-solid-state battery.

Means for solving the problem

The solid-state electrolyte according to the present invention is a solid-state electrolyte having a NaSICON-type crystal structure. The solid-state electrolyte according to the present invention is represented by a general formula $Li_{1+x}M_y(PO_4)_3$ (a part of P may be substituted by at least one selected from the group consisting of Si, B, and V, M includes at least one of the elements which are monovalent to tetravalent cations, x is -0.200 or more and 0.900 or less, and y is 2.001 or more and 2.200 or less).

In the solid-state electrolyte in which Li is the ionic conduction species, the ion conduction path is constituted by the Li site. Therefore, it is considered that when the Li site is substituted by another element other than the ionic conduction species, the ionic conductivity decreases. In the solid-state electrolyte represented by the general formula $Li_{1-x}M_y(PO_4)_3$, when y is larger than 2, (y-2) pieces of Ms are considered to be located at the Li site. Therefore, it is considered that when y is larger than 2, the ionic conductivity of the solid-state electrolyte decreases. However, as a result of intensive research, the present inventors have found that, when M includes at least one of the elements which are monovalent to tetravalent cations and y is 2.001 or more and 2.200 or less, the ionic conductivity of the solid-state electrolyte can be improved by setting y to 2.001 or more and 2.200 or less, rather than when y is 2. Accordingly, they have completed the present invention. That is, in the solid-state electrolyte according to the present invention, M includes at least one of the elements which are monovalent to tetravalent cations and y is 2.001 or more and 2.200 or less. Therefore, the solid-state electrolyte according to the present invention has high ion conductivity.

In the solid-state electrolyte according to the present invention, it is preferable that y is 2.001 or more and 2.100 or less in the above formula.

In the solid-state electrolyte according to the present invention, it is preferable that y is 2.001 or more and 2.050 or less in the above formula.

In the solid-state electrolyte according to the present invention, it is preferable that M includes at least one of the elements which are monovalent to trivalent cations.

In the solid-state electrolyte according to the present invention, it is preferable that M includes at least one element selected from the group consisting of Zr, Hf, Ca, Y, Na, Al, Ga, Sc, V, In, Ti, Ge, and Sn.

In the solid-state electrolyte according to the present invention, it is preferable that M includes at least one element selected from the group consisting of Na, Ca, Y, Al, Ga, Sc, V, and In.

In the solid-state electrolyte according to the present invention, it is preferable that M includes at least one element selected from the group consisting of Zr, Hf, Sn, Ti, and Ge.

The all-solid-state battery according to the present invention includes: a solid-state electrolyte which includes the solid-state electrolyte according to the present invention; a positive electrode which is joined to one surface of the solid-state electrolyte layer by sintering; and a negative electrode which is joined to another surface of the solid-state electrolyte by sintering.

Advantageous effect of the invention

According to the present invention, it is possible to improve the ionic conductivity of the solid-state electrolyte layer and to improve the battery characteristics of the all-solid-state battery.

BRIEF EXPLANATION OF DRAWINGS

FIG. 1 is a schematic cross-sectional view of an all-solid-state battery according to an embodiment of the present invention.
FIG. 2 is a Cole-Cole plot of the solid-state electrolyte produced in Example 1.
FIG.3 is a Cole-Cole plot of the solid-state electrolyte produced in Comparative Example 1.

MODE FOR CARRYING OUT THE INVENTION

Hereinafter, an example of preferred embodiments of the present invention will be described. However, the following embodiments are merely examples. The present invention is not limited to the following embodiments at all.

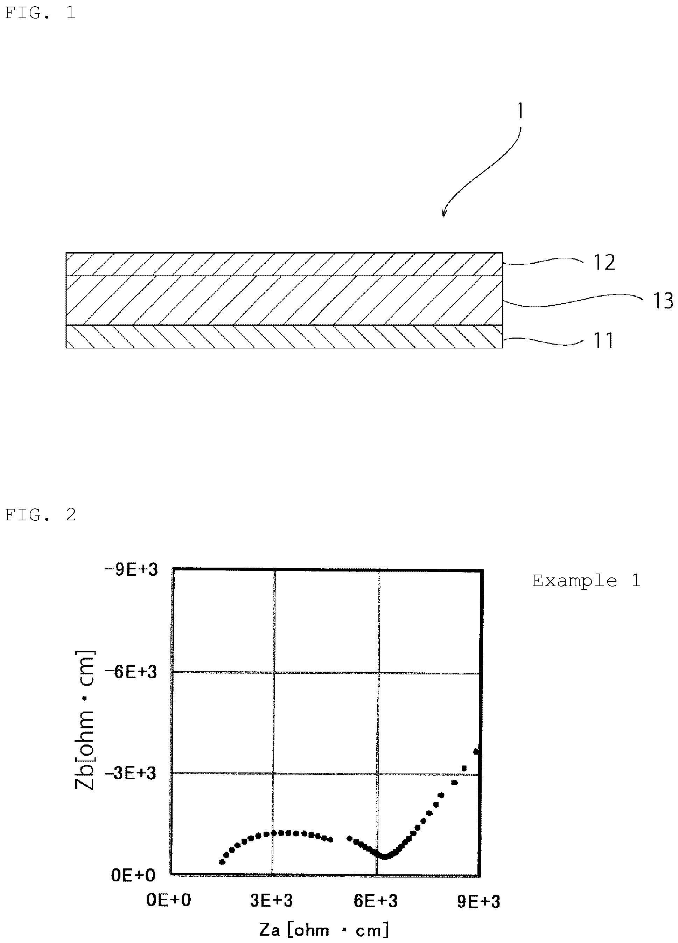

FIG. 1 is a schematic cross-sectional view of an all-solid-state battery 1 according to this embodiment. As shown in FIG. 1, the battery includes a positive electrode 11, a negative electrode 12, and a solid-state electrolyte layer 13.

The positive electrode 11 includes positive electrode active material particles. Examples of the positive electrode active material particles to be preferably used include lithium-containing phosphate compound particles having a NaSICON-type structure, lithium-containing phosphate compound particles having an olivine-type structure, lithium-containing layered oxide particles, and lithium-containing oxide particles having a spinel-type structure. Specific examples of the lithium-containing phosphate compound having a NaSICON-type structure to be preferably used include $Li_3V_2(PO_4)_3$. Specific examples of the lithium-containing phosphate compound having an olivine-type structure to be preferably used include $LiFe(PO_4)$ and $LiMnPO_4$. Specific examples of the lithium-containing layered oxide particles to be preferably used include $LiCoO_2$ and $LiCO_{1/3}Ni_{1/3}Mn_{1/3}O_2$. Specific examples of the lithium-containing oxide having a spinel-type structure to be preferably used include $LiMn_2O_4$ and $LiNi_{0.5}Mn_{1.5}O_4$. Only one kind of these positive electrode active material particles may be used, or a plurality of kinds thereof may be mixed and used.

The positive electrode 11 may further include a solid-state electrolyte. The kind of solid-state electrolyte included in the positive electrode 11 is not particularly limited, and it is preferable to include the same kind of solid-state electrolyte as the solid-state electrolyte contained in the solid-state electrolyte layer 13. In this case, the close contact between the solid-state electrolyte layer 13 and the positive electrode 11 can be improved.

The negative electrode 12 includes negative electrode active material particles. Specific examples of the negative electrode active material particles to be preferably used include compound particles represented by the formula $MO_X$ (M is at least one selected from the group consisting of Ti, Si, Sn, Cr, Fe, Nb, P, and Mo. X is 0.9 or more and 2.5 or less), graphite-lithium compound particles, lithium alloy particles, lithium-containing phosphate compound particles having a NaSICON-type structure, lithium-containing phosphate compound particles having an olivine-type structure, and lithium-containing oxide particles having a spinel-type structure. Specific examples of lithium alloys to be preferably used include Li-Al alloys. Specific examples of the lithium-containing phosphate compound having a NaSICON-type structure to be preferably used include $Li_3V_2(PO_4)_3$. Specific examples of the lithium-containing oxide having a spinel-type structure to be preferably used include $Li_4Ti_5O_{12}$. Only one kind of these negative electrode active material particles may be used, or a plurality of kinds thereof may be mixed and used.

The negative electrode 12 may further include a solid-state electrolyte. The kind of solid-state electrolyte included in the negative electrode 12 is not particularly limited, and it is preferable to include the same kind of solid-state electrolyte as the solid-state electrolyte contained in the solid-state electrolyte layer 13. In this case, the close contact between the solid-state electrolyte layer 13 and the negative electrode 12 can be improved.

The solid-state electrolyte layer 13 is disposed between the positive electrode 11 and the negative electrode 12. That is, the positive electrode 11 is disposed on one side of the solid-state electrolyte layer 13, and the negative electrode 12 is disposed on the other side thereof. Each of the positive and negative electrodes 11 and 12 is joined to the solid-state electrolyte layer 13 by sintering. In other words, the positive electrode 11, the solid-state electrolyte layer 13, and the negative electrode 12 are an integrated sintered body.

The solid-state electrolyte layer 13 includes a solid-state electrolyte having a NaSICON-type crystal structure, which is represented by the general formula $Li_{1+x}M_y(PO_4)_3$ (in which a part of P may be substituted by at least one selected from the group consisting of Si, B, and V, M includes at least one of the elements which are monovalent to tetravalent cations, x is -0.200 or more and 0.900 or less, and y is 2.001 or more and 2.200 or less). Thus, the solid-state electrolyte layer 13 according to this embodiment has high ionic conductivity. Therefore, the all-solid-state battery 1 having the solid-state electrolyte layer 13 is excellent in properties such as power density. Although the reason for this is not certain, it is considered due to the fact that, for example, when M includes an element which is a tetravalent cation and y is 2.001 or more and 2.200 or less, a high ion conducting phase is likely to be formed by M. On the other hand, when M includes elements which are monovalent to trivalent cations and y is 2.001 or more and 2.200 or less, it is considered due to the fact that a high ion conducting phase is formed and further it is possible to suppress a decrease in the amount of Li contributing to ionic conduction from the viewpoint of charge compensation.

Specific examples of preferred elements as monovalent to trivalent elements M include Na, Ca, Y, Al, Ga, Sc, V. Among them, Na and Ca are preferably used as the monovalent to trivalent elements M.

Specific examples of preferred elements as tetravalent elements M include Zr, Hf, Sn, Ti, and Ge. Among them, Zr, Hf, and Sn are more preferably used as the tetravalent elements M.

The M may be constituted of a single element or may be constituted of plural kinds of elements. When M is constituted of plural kinds of elements, it is preferable that M includes both the elements which are monovalent to trivalent ions and the element which is a tetravalent ion. The M includes both the elements which are monovalent to trivalent ions and the element which is a tetravalent ion so that it is possible to obtain high ion conductivity. This is considered to be because the amount of Li contributing to ionic conduction can be increased.

Note that, in the general formula $Li_{1+x}M_y(PO_4)_3$, a part of P may be substituted by at least one selected from the group consisting of B, Si, and V. In that case, at least one molar ratio ((at least one selected from the group consisting of B, Si, and V)/(P)) selected from the group consisting of B, Si, and V to P relative to P is preferably 0.0 or more and 2.0 or less, and more preferably 0.0 or more and 0.5 or less.

The stoichiometric ratio 1 + x of Li can be appropriately adjusted in a range of $-0.200 \leq x \leq 0.900$ in order to maintain the neutrality between the positive and negative charges in the crystal. The range of x is more preferably $-0.160 \leq x \leq 0.500$, and still more preferably $0.050 \leq x \leq 0.350$.

Note that the compound represented by the formula $Li_{1+x}M_y(PO_4)_3$ has 12 oxygens, but regarding the number of oxygen contained in the compound represented by this formula, the stoichiometric ratio of O does not need to be strictly 12 from the viewpoint of maintaining the neutrality between the positive and negative charges. In the present invention, the compound represented by the formula $Li_{1+x}M_y(PO_4)_3$ includes compounds containing 7 mol or more and 15 mol or less of oxygen.

Hereinafter, the present invention will be described in more detail based on specific examples, however, the present invention is not limited to the following examples at all, and may be modified as appropriate without changing the gist thereof.

(Comparative Example 1)

Raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the formula $Li_{1+x}M_y(PO_4)_3$ satisfying the conditions shown in Table 1 was obtained. Subsequently, the weighed raw material powders were sealed in a 500 ml polyethylene pot and rotated on a pot rack at a speed of 150 rpm for 16 hours, and the raw materials were mixed. Subsequently, the raw materials were fired in an air atmosphere at 500°C for 1 hour and then fired at 800°C for 6 hours to remove volatile components. Subsequently, the obtained fired product was sealed in a 500 ml polyethylene pot together with water and φ 5 mm cobblestones, and rotated on a pot rack at a speed of 150 rpm for 16 hours, thereby grinding the fired product. Thereafter, the ground product was placed on a hot plate at 120°C and heated to remove moisture. The obtained ground product was fired in an air atmosphere at 900°C to 1200°C for 20 hours to obtain a solid-state electrolyte powder having the composition of Comparative Example 1 shown in Table 1 below.

(Example 1)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 2)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 3)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 4)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 5)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 6)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 7)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Example 8)

A solid-state electrolyte powder was obtained in the same manner as in Comparative Example 1 except that raw materials such as lithium carbonate ($Li_2CO_3$), zirconium oxide ($ZrO_2$), ammonium dihydrogen phosphate ($NH_4H_2PO_4$), calcium oxide (CaO), yttrium oxide ($Y_2O_3$), and yttrium stabilized zirconia were weighed so that the composition was such that the general formula $Li_{1+x}M_y(PO_4)_3$ satisfying the conditions shown in Table 1 was obtained.

(Comparative Example 2)

A solid-state electrolyte powder was obtained in the same manner as in Comparative Example 1 except that raw materials including lithium carbonate ($Li_2CO_3$), ammonium dihydrogen phosphate ($NH_4H_2PO_4$), calcium oxide (CaO), yttrium oxide ($Y_2O_3$), and hafnium oxide ($HfO_2$) were weighed so that the composition was such that the general formula

$Li_{1+X}M_y(PO_4)_3$ satisfying the conditions shown in Table 1 was obtained.

(Example 9)

A solid-state electrolyte powder was obtained in the same manner as in Comparative Example 1 except that raw materials including lithium carbonate ($Li_2CO_3$), ammonium dihydrogen phosphate ($NH_4H_2PO_4$), calcium oxide (CaO), yttrium oxide ($Y_2O_3$), and hafnium oxide ($HfO_2$) were weighed so that the composition was such that the general formula $Li_{1+X}M_y(PO_4)_3$ satisfying the conditions shown in Table 1 was obtained.

(Comparative Example 3)

A solid-state electrolyte powder was obtained in the same manner as in Comparative Example 1 except that raw materials including lithium carbonate ($Li_2CO_3$), ammonium dihydrogen phosphate ($NH_4H_2PO_4$), calcium oxide (CaO), yttrium oxide ($Y_2O_3$), and tin dioxide ($SnO_2$) were weighed so that the composition was such that the formula $Li_{1+X}M_y(PO_4)_3$ satisfying the conditions shown in Table 1 was obtained.

(Example 10)

A solid-state electrolyte powder was obtained in the same manner as in Comparative Example 1 except that raw materials including lithium carbonate ($Li_2CO_3$), ammonium dihydrogen phosphate ($NH_4H_2PO_4$), calcium oxide (CaO), yttrium oxide ($Y_2O_3$), and tin dioxide ($SnO_2$) were weighed so that the composition was such that the formula $Li_{1+X}M_y(PO_4)_3$ satisfying the conditions shown in Table 1 was obtained.

(Comparative Example 4)

A solid-state electrolyte powder was obtained in the same manner as in Comparative Example 1 except that raw materials including lithium carbonate ($Li_2CO_3$), ammonium dihydrogen phosphate ($NH_4H_2PO_4$), sodium carbonate ($Na_2CO_3$), and zirconium oxide ($ZrO_2$) were weighed so that the composition was such that the general formula $Li_{1+X}M_y(PO_4)_3$ satisfying the conditions shown in Table 1 was obtained.

(Example 11)

A solid-state electrolyte powder was obtained in the same manner as in Comparative Example 1 except that raw materials including lithium carbonate ($Li_2CO_3$), ammonium dihydrogen phosphate ($NH_4H_2PO_4$), sodium carbonate ($Na_2CO_3$), and zirconium oxide ($ZrO_2$) were weighed so that the composition was such that the general formula $Li_{1+X}M_y(PO_4)_3$ satisfying the conditions shown in Table 1 was obtained.

(Evaluation of Crystal Structure of Solid-State Electrolyte)

The solid-state electrolyte powders produced in Examples 1 to 11 and Comparative Examples 1 to 4 were measured using an X-ray diffractometer (XRD) at 25°C, a scan rate of 4.0°/min, and a measuring angle range of 10° to 60°, and the crystal structures thereof were evaluated by comparing with the patterns of Joint Committee on Powder Diffraction Standards (JCPDS) Cards. As a result, it was confirmed that the solid-state electrolyte produced in each of the Examples 1 to 11 and Comparative Examples 1 to 4 had a NaSICON-type crystal structure.

(Evaluation of Ionic Conductivity of Solid-State Electrolyte)

The ionic conductivity of the solid-state electrolyte produced in each of the Examples 1 to 11 and Comparative Examples 1 to 4 was measured in the following manner.

A sintered tablet was produced in the following manner. First, a solid-state electrolyte, a butyral resin, and alcohol were mixed at a mass ratio of solid-state electrolyte: butyral resin: alcohol = 98 : 15 : 140 and then the alcohol was removed on a hot plate at 80°C, thereby obtaining a solid-state electrolyte powder coated with the butyral resin as a binder. Next, the solid-state electrolyte powder coated with the butyral resin was pressed at 90 MPa using a tablet molding machine so as to be molded into a tablet shape. The tablet was sandwiched between two porous setter to produce a sintered body. Specifically, the sintered body was heated to 500°C in a nitrogen gas atmosphere containing 10% by volume of oxygen to remove the butyral resin, and then the sintered body was fired at a temperature of 1000°C to 1200°C in an air atmosphere to obtain a sintered tablet.

Next, the ionic conductivity of the produced sintered tablet was measured. Specifically, a platinum (Pt) layer as a current collector layer was formed on both sides of the sintered tablet by sputtering, the sintered tablet was dried at 100°C to remove moisture, and sealed with a 2032 type coin cell. The ionic conductivity was calculated by measuring the AC impedance with respect to the sealed cell. The AC impedance was measured using a frequency response analyzer (FRA) (manufactured by Solartron) in the frequency range of 0.1 MHz to 1 MHz with an amplitude of $\pm$ 10 mV at a temperature of 25°C.

The ionic conductivity $\sigma$ was calculated from the following equation by determining the resistivity (the sum of the grain resistivity and the grain-boundary resistivity) of each of the solid-state electrolytes from the Cole-Cole plot obtained from the measurement of the AC impedance. Note that the resistivity (the sum of the grain resistivity and the grain-boundary resistivity) of each of the solid-state electrolytes was defined as the value at the right end of the arc in the Cole-Cole plot. The results are shown in Tables 1 to 4.

$$\sigma = (t/A) \times (1/R)$$

$\sigma$:    Ionic conductivity
t:    Thickness of sample
A:    Area of electrode
R:    Resistance of solid-state electrolyte

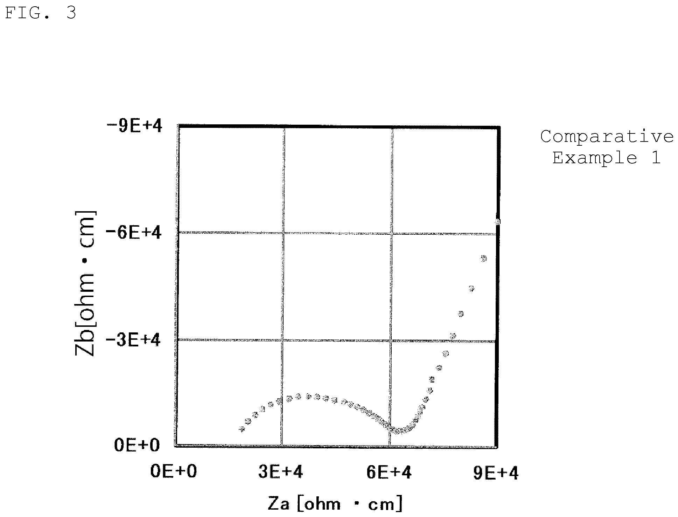

FIG. 2 shows the Cole-Cole plot of the solid-state electrolyte produced in Example 1. FIG. 3 shows the Cole-Cole plot of the solid-state electrolyte produced in Comparative Example 1.

[Table 1]

| | M | | | x | y | Ionic conductivity ($\times 10^{-5}$ S/cm) |
| --- | --- | --- | --- | --- | --- | --- |
| | Ca | Y | Zr | | | |
| Comparative Example 1 | 0.100 | 0.114 | 1.786 | 0.314 | 2.000 | 1.6 |
| Example 1 | 0.100 | 0.114 | 1.787 | 0.310 | 2.001 | 16.0 |
| Example 2 | 0.100 | 0.115 | 1.795 | 0.275 | 2.010 | 15.0 |
| Example 3 | 0.100 | 0.116 | 1.814 | 0.196 | 2.030 | 13.0 |
| Example 4 | 0.100 | 0.117 | 1.833 | 0.117 | 2.050 | 12.0 |
| Example 5 | 0.100 | 0.118 | 1.842 | 0.078 | 2.060 | 9.0 |
| Example 6 | 0.100 | 0.119 | 1.871 | -0.041 | 2.090 | 8.0 |
| Example 7 | 0.100 | 0.120 | 1.880 | -0.080 | 2.100 | 7.0 |
| Example 8 | 0.100 | 0.121 | 1.899 | -0.159 | 2.120 | 4.0 |

[Table 2]

| | M | | | x | y | Ionic conductivity ($\times 10^{-5}$ S/cm) |
| --- | --- | --- | --- | --- | --- | --- |
| | Ca | Y | Hf | | | |
| Comparative Example 2 | 0.100 | 0.114 | 1.786 | 0.314 | 2.000 | 1.1 |
| Example 9 | 0.110 | 0.114 | 1.786 | 0.294 | 2.010 | 10.0 |

[Table 3]

| | M | | | x | y | Ionic conductivity ($\times 10^{-5}$ S/cm) |
| --- | --- | --- | --- | --- | --- | --- |
| | Ca | Y | Sn | | | |
| Comparative Example 3 | 0.100 | 0.114 | 1.786 | 0.314 | 2.000 | 0.9 |
| Example 10 | 0.110 | 0.114 | 1.786 | 0.294 | 2.010 | 10.0 |

**EP 3 447 837 A1**

[Table 4]

| | M | | x | y | Ionic conductivity ($\times 10^{-5}$S/cm) |
| --- | --- | --- | --- | --- | --- |
| | Na | Zr | | | |
| Comparative Example 4 | 0.050 | 1.950 | 0.150 | 2.000 | 1.4 |
| Example 11 | 0.100 | 1.950 | 0.100 | 2.050 | 15.0 |

The ionic conductivity of the solid-state electrolyte produced in each of the Examples 1 to 8 was $0.4 \times 10^{-4}$S/cm to $1.6 \times 10^{-4}$S/cm, both of which were higher than that of the solid-state electrolyte produced in Comparative Example 1.

The ionic conductivity of the solid-state electrolyte produced in Example 9 was $1.0 \times 10^{-4}$S/cm, which was higher than that of the solid-state electrolyte produced in Comparative Example 2.

The ionic conductivity of the solid-state electrolyte produced in Example 10 was $1.0 \times 10^{-4}$S/cm, which was higher than that of the solid-state electrolyte produced in Comparative Example 3.

The ionic conductivity of the solid-state electrolyte produced in Example 11 was $1.5 \times 10^{-4}$S/cm, which was higher than that of the solid-state electrolyte produced in Comparative Example 4.

In particular, it is understood from the results of Examples 1 to 4 and 9 to 11 that higher ionic conductivity can be obtained when y is 2.001 or more and 2.050 or less in the formula $Li_{1+x}M_y(PO_4)_3$.

DESCRIPTION OF REFERENCE SYMBOLS

1: All-solid-state battery
11: Positive electrode
12: Negative electrode
13: Solid-state electrolyte layer

**Claims**

**1.**   A solid-state electrolyte having a NaSICON-type crystal structure, represented by a general formula $Li_{1+x}M_y(PO_4)_3$ (in which a part of P may be substituted by at least one selected from the group consisting of Si, B, and V, M includes at least one of the elements which are monovalent to tetravalent cations, x is -0.200 or more and 0.900 or less, and y is 2.001 or more and 2.200 or less).

**2.**   The solid-state electrolyte according to claim 1, wherein in the general formula, y is 2.001 or more and 2.100 or less.

**3.**   The solid-state electrolyte according to claim 2, wherein in the general formula, y is 2.001 or more and 2.050 or less.

**4.**   The solid-state electrolyte according to any one of claims 1 to 3, wherein M includes at least one of the elements which are monovalent to trivalent cations.

**5.**   The solid-state electrolyte according to any one of claims 1 to 4, wherein M includes an element which is a tetravalent cation.

**6.**   The solid-state electrolyte according to any one of claims 1 to 5, wherein M includes at least one element selected from the group consisting of Zr, Hf, Ca, Y, Na, Al, Ga, Sc, V, In, Ti, Ge, and Sn.

**7.**   The solid-state electrolyte according to claim 4, wherein M includes at least one element selected from the group consisting of Na, Ca, Y, Al, Ga, Sc, V, and In.

**8.**   The solid-state electrolyte according to claim 5, wherein M includes at least one element selected from the group consisting of Zr, Hf, Sn, Ti, and Ge.

**9.**   An all-solid-state battery comprising:

8

a solid-state electrolyte layer which includes the solid-state electrolyte according to any one of claims 1 to 8;
a positive electrode which is joined to one surface of the solid-state electrolyte layer by sintering; and
a negative electrode which is joined to another surface of the solid-state electrolyte by sintering.

FIG. 1

FIG. 2

Example 1

FIG. 3

Comparative
Example 1

## INTERNATIONAL SEARCH REPORT

International application No.

PCT/JP2017/004061

A.  CLASSIFICATION OF SUBJECT MATTER
*H01M10/0562*(2010.01)i, *C01B25/45*(2006.01)i, *H01B1/06*(2006.01)i, *H01B1/08*
(2006.01)i, *H01M10/052*(2010.01)i

According to International Patent Classification (IPC) or to both national classification and IPC

B.  FIELDS SEARCHED

Minimum documentation searched (classification system followed by classification symbols)
H01M10/0562, C01B25/45, H01B1/06, H01B1/08, H01M10/052

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2015-76324 A  (Murata Mfg. Co., Ltd.), 20 April 2015 (20.04.2015), claims 1 to 10 (Family: none) | 1-9 |
| A | JP 2015-49981 A  (Murata Mfg. Co., Ltd.), 16 March 2015 (16.03.2015), claims 1 to 8 (Family: none) | 1-9 |
| A | JP 2-250264 A  (Japan Synthetic Rubber Co., Ltd.), 08 October 1990 (08.10.1990), entire text (Family: none) | 1-9 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search   21 April 2017 (21.04.17) | Date of mailing of the international search report   09 May 2017 (09.05.17) |
|---|---|
| Name and mailing address of the ISA/   Japan Patent Office   3-4-3,Kasumigaseki,Chiyoda-ku,   Tokyo 100-8915,Japan | Authorized officer        Telephone No. |

Form PCT/ISA/210 (second sheet) (January 2015)

## EP 3 447 837 A1

**INTERNATIONAL SEARCH REPORT**

International application No.

PCT/JP2017/004061

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2016-51539 A  (Murata Mfg. Co., Ltd.), 11 April 2016 (11.04.2016), claims 1 to 8 (Family: none) | 1-9 |
| E,X | WO 2017/033480 A1  (Hitachi, Ltd.), 02 March 2017 (02.03.2017), paragraphs [0036], [0107] to [0109] (Family: none) | 1,4-9 |

Form PCT/ISA/210 (continuation of second sheet) (January 2015)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007258148 A
- JP 2001143754 A
- JP 2015065021 A